# EUROPEAN PATENT APPLICATION

(11) **EP 2 913 765 A1**
(43) Date of publication of application: **02.09.2015**
(21) Application number: 14156909.5
(22) Date of filing: 27.02.2014
(51) Int. Cl.: G06F 17/30, G06Q 30/00

(54) **Method and system for planning support**

(71) Applicant: Kandler, Hilmar, 82239 Alling (DE)
(72) Inventor: Kandler, Hilmar, 82239 Alling (DE)
(74) Representative: Bittner, Peter

(57) **Abstract**

A computer implemented method, computer program product, and system for planning support. The computer system includes a storage component (110) having a relational database configured to store: a first data structure (111) of a first type having at least a first primary key column (PK1) and a first field column (F1), a second data structure (112) of a second type having at least a second primary key column (PK2), a second field column (F2), a start column (S), and an end column (E), and a third data structure (113) of a third type having at least a third primary key column (PK3), a quantity column (Q), and a point in time column (T), A data record (ID2) of the second data structure (112) defines a validity time interval for a data record (ID1) of the first data structure (111). A data record (ID3, ID4) of the third data structure (113) defines a plan quantity value for a specific point in time for the data record (ID1) of the first data structure (111). The system further includes an interface component (130) configured to communicate with a client (200) to enable the client (200) to edit the plan quantity value for a specific point in time independent from the respective validity time interval.

## Description

### Technical Field

The present invention generally relates to electronic data processing, and more particularly, relates to computer systems, computer implemented methods, and computer program products for planning support.

### Background

Classic computer systems for planning support are typically based on standard relational database models of multidimensional OLAP data cubes. Planning support of a computer system as used herein after includes to provide a computer system with appropriate data structures and computer implemented tools to enable a user to define future planning values for specific planning variables in order to be prepared for the handling of future needs arising from the planning variables. An example of a planning variable can be the memory capacity of an IT system over time which is needed to guarantee stable operation of the IT system at any given time during the respective planning time interval. Another example of a planning variable can be the planned production quantity of a certain product during the respective planning time interval.

Traditional planning systems provide data structures to plan planning values for the planning variables for certain time intervals. Typically, the time interval can be defined at different stages of granularity, e.g., on a yearly, monthly, daily, etc. basis. However, once a planning interval is defined it relates to all plan values of all planning variables for the defined planning interval. In cases where a high number of planning variables is planned at a high granularity in the planning time interval dimension this may lead to an explosion of planning data created in the respective data structures of the system. Typically, at least some planning variables change at a low frequency (LF variables) and do not need to be planned at the same level of granularity in the time dimension as other planning variables which change at a higher frequency (HF variables). Traditional planning systems replicate the planning values of the LF variables to fill the planning data structures at the same planning interval granularity level which is required by the HF variables. This usually leads to high data redundancy and corresponding memory consumption.

### Summary

There is therefore a need to improve computer systems for planning support (planning system) with regards to memory consumption caused by the planning data structures of the planning system.

The computer system, computer implemented method and computer program product according to the independent claims solve the problem of how to reduce memory consumption of planning systems and at the same time allowing higher flexibility in the creation of planning data structures.

Embodiments of the proposed invention according to the independent claims propose data structures enabling a faster adaptation of customizing parameters of the planning system without causing a need for individual programming. The data volume which needs to be stored in the planning system can be reduced significantly using the data structures and tables as described more in detail in the following.

The proposed computer system is based on relational database technology in the context of creating planning values for planning variables. Such planning variables may refer to planning the capacity of IT system resources, maintenance activities of production equipment, medication administration quantities for patients, sales or profit figures of a product or product family. The planning data may also refer to any other category such as markets, customers, etc. The planning values typically describe a quantitative development of a characteristic value over time for the respective planning variable.

In one embodiment, the proposed computer system for planning support (planning system) includes a storage component having a relational database which is configured to store various specific data structures. The storage component can include a relational database which can store relational database tables (tables). The tables which are described in the following are used by the computer system in operation but do not need to be present in the computer system in its initial state. For example, the tables may be generated by the computer system in response to configuration data received from a user of the system as disclosed later.

A first data structure (first table) of a first type which can be stored by the storage component has at least a first primary key column and a first field column.

A second data structure (second table) of a second type has at least a second primary key column, a second field column, a start column, and an end column.

A third data structure (third table) or a third type has at least a third primary key column, a quantity column, and a point in time column.

Between the first table and the second table a 1:n relation is defined. Thereby, a data record of the second table defines a validity time interval for a data record of the first table. There can be multiple data records of the second table being associated with the same data record of the first table defining multiple validity time intervals for this same data record.

Between the first table and the third table a 1:n relation is defined. Thereby a data record of the third table defines a plan quantity value for a specific point in time for the data record of the first table. There can be multiple data records of the third table being associated with the same data record of the first table defining multiple plan quantity values for multiple specific points in time for this same data record. Plan quantity value as used hereinafter can be of type integer but does also extend to any other summable data type which can be aggregated (e.g., sales figures of type real or any other floating point format).

In other words, a planning variable may be implemented as a field (column) in a relational database table. For such a field (column) the system creates a specific data structure (table) of the first type in the relational database. When such a specific table for a planning variable is created the proposed computer system may create a further table of the third type for storing planning values for any point in time. That is, the further table of the third type has a reference to the specific data structure of the first type (e.g., a foreign key) and includes a column for the planning value (e.g., a plan quantity value) and a column for a point in time at which the planned value is supposed to be valid. That is, planning time intervals can be freely defined and do not need to be predefined.

The computer system further includes an interface component which is configured to communicate with a client to enable the client to edit the plan quantity value for a specific point in time independent from the respective validity time interval.

In one embodiment, the data structure configuration as claimed allows storing plan quantity values in the third table for a certain field defined in the first table at any time point, whereas the validity time interval defined in the second table for the respective field may determine if the plan quantity values should be applied by the system during the defined validity time intervals.

In one embodiment the second table may further include a value column. The value column can store a value for each data record of the second table which is valid during the specified validity time interval for the respective field. This allows, for example, defining multiple validity time intervals for the same data field with a different value for each validity interval. For example, if a component of a product is associated with a cost value the second table allows to automatically associate the plan quantities in the third table with the respective cost values that are valid during the validity time intervals as defined in the second table.

For example, if the component of a product changes at a certain change point in the future (e.g., second source product), the second table can define a first validity interval for the currently used component valid up to the change point and a second validity interval for the substitute component valid from the change point onwards. This may be implemented through corresponding variants of the component. There is no impact on the third table regarding the quantity planning for the component. Only the component associated with the respective primary key in the first table needs to be associated with the plan quantity values. The system automatically derives the corresponding quantity values for the current or future substitute component according to the respective validity time intervals.

However, plan quantity values can also exist independent from any validity time intervals. That is, plan quantity values can be stored in the third table for any field defined in the first table even if for this first table field no respective second table entries (validity intervals) exist. For example, there may be a plan quantity value for a point in time that is outside (before or after) a validity interval. Or, a plan quantity can exist for a point in time inside the validity time interval, but the quantity value may not be approved.

By using a relational database having the claimed data structure setup it is possible to store planning data in an efficient manner and avoid memory consumption through unused data cells like it can be seen in the prior art. For example, in prior art planning support systems the highest granularity level for the used planning intervals typically determines the memory consumption. For example, if a user wants to plan the coming month on a weekly basis and the following 5 months on a monthly basis and the following 6 months on a half year basis a classic planning support system generates respective data cells (namely 52 data cells) for the whole planning year on a weekly basis although such cells are only useful for the coming months in the example. This leads to a high consumption of memory by unused data cells. According to the claimed data structure set up the data storage component may only store 4 planning values for the coming months, 5 planning values for the following months and 1 value for the second half of the planning year, thus leading to a total of 10 planning values instead of 52 planning values as in the prior art example. Therefore, the claimed data structure setup reduces the memory consumption especially in cases where a planning time horizon includes various planning intervals with different planning interval granularities. In cases of a high planning granularity (e.g., on a daily or even hourly basis) huge memory savings can be achieved.

Each of the available data structures may include at least one control column. The control column can store control values for the respective data records. Each control value indicates permissiveness of an operation for the respective data record. Control columns can be implemented as bit columns allowing to set certain control flags. For example, a control column can be used to visualize in a user interface (UI) that for a certain planning item represented by the specific table additional information is available.

Through the use of control columns a consolidated view is enabled for a user over an arbitrary time period. That is, if a graphical user interface is indicating to the user that additional information is available for a planning value in a certain time period actually multiple information parts can exist for various time periods falling into the consolidated time period. This information can simply be retrieved from the bit information from the respective control column in relation to the respective time periods. The information itself can be stored elsewhere and does not need to be included in the specific table which reduces memory consumption while at the same time increasing flexibility regarding the dynamic visualization of planning values over arbitrary time periods.

In one embodiment, the computer system can further store a computation element of a fourth type. For example, the computation element can be stored in a system database which keeps track of all fields defined in the computer system. The computation element has a computation rule for a compute operation applied to one or more values wherein each value is either stored in any one of the first, second, or third data structures or is obtained as output of a further computation element. The computation defined in the compute element is automatically performed based on the field(s) of the respective data structure(s) which is/are referenced in the computation rule include value(s) or based on the referenced further computation field(s).

In one embodiment, the computer system may include a generator component which can generate the data structures and their relations in response to information received from the client about respective fields and their purposes. For example, this allows a user to specify only a few pieces of information, such as for example, the name of the field and the respective type. The system can then automatically create a corresponding data structure.

The generator component can further generate a set of control procedures for the available data structures wherein each control procedure is based on a predefined, parameterized procedure template and the respective data structure. Such generation can occur fully automatically or in response to a corresponding user request. Examples of such control procedures are procedures for creating data records in the respective tables, updating or deleting data records, reading data records and other functions as described in the detailed description.

In one embodiment, the computer system can store at least one hierarchical authorization rule which is configured to constrain a user's authorization with regards to access rules for a specific data structure field by means of a constraint clause. The constraint clause can be configured to restrict the access of the user to a subset of datasets which complies with the restriction imposed by the constraint clause. The definition of the constraint clause can be independent of the existence of the specific data structure field and can also be independent of the existence of a field value in cases where the respective specific data structure field. in other words, the computer system allows to define and store authorization rule, for example in the system data base, which can handle authorizations in respect of fields or field values which are only to be created in the future but which do not yet exist at the point in time when the authorization rule is defined.

In one embodiment, the computer system includes an admissibility clause which is associated with a particular data structure field. The admissibility clause is configured as a rule for determining the admissibility of datasets associated with the particular data structure field. Such a rule can be defined with the syntax of a SQL where-clause. Every field of any data structure can be used in this definition. A rule can be combined with one or more data structures. The rule is then valid for every single data structure which it is combined with. A rule can be defined as a hard or soft rule. A hard rule is enforced by the system immediately when a user is trying to change data. If the data does not meet the hard rule, the change is prevented by the system. For a soft rule the system only shows the user if the data meets the soft rule or not. To check if a value is valid or not, the system can generate a SQL text in which the field itself and all fields of the combined rule are included. The rule is used for the respective where-clause of the SQL text. When the record of the value is included in the queried result set, the value is valid. If it is not included it is not valid. This can be managed in additional control columns in the respective data structure for visualization in the user interface.

In one embodiment, the computer system includes a layout component with one or more layout control elements. A specific control element can be associated with at least one table field defined in the available data structures. The specific control element can be configured to communicate with any one of the control procedures associated with the at least one table field. This allows the flexible creation of graphical user interfaces (GUI) based on such layout control elements. Especially when GUIs are to be generated for complex planning scenarios the binding of controls to table fields with respective control procedures avoids generation of control specific SQL code. For example, all relevant information for generating a GUI to support the capturing of plan quantities over time grouped by product or by business unit is completely contained in the respective field information in the system DB and the available data manipulation procedures which are implemented by the respective control procedures. As a consequence, a layout control element with the respective binding automatically presents the data of the respective field(s) in an appropriate manner to the user without any further field specific coding requirements, because, for example the control element knows exactly what (which data) needs to be updated where (which tables).

In further embodiments, a computer program product when loaded into a memory of the computer system and executed by at least one processor of the computer system causes the computer system to execute the steps of a respective computer implemented method.

Further aspects of the invention will be realized and attained by means of the elements and combinations particularly depicted in the appended claims. It is to be understood that both, the foregoing general description and the following detailed description are exemplary and explanatory only and are not restrictive of the invention as described.

### Brief Description of the Drawings

FIG. 1 is a simplified block diagram of a computer system for planning support according to an embodiment of the invention;
FIG. 2 shows database tables of the planning support system and their relations according to an embodiment of the invention;
FIG. 3 shows a specific example of data structures and their relations according to an embodiment of the invention;
FIG. 4 illustrates use of a computation element according to an embodiment of the invention;
FIG. 5 illustrates details of the system DB and the definition of content based hierarchical authorization rules according to an embodiment of the invention;
FIG. 6 shows a specific example of using content based hierarchical authorizations;
FIG. 7 illustrates possible paths in a complex data model according to an embodiment of the invention;
FIG. 8 illustrates a specific example of data structures supporting bills of material according to an embodiment of the invention; and
FIG. 9 is a simplified flowchart of a computer implemented method according to an embodiment of the invention.

### Detailed Description

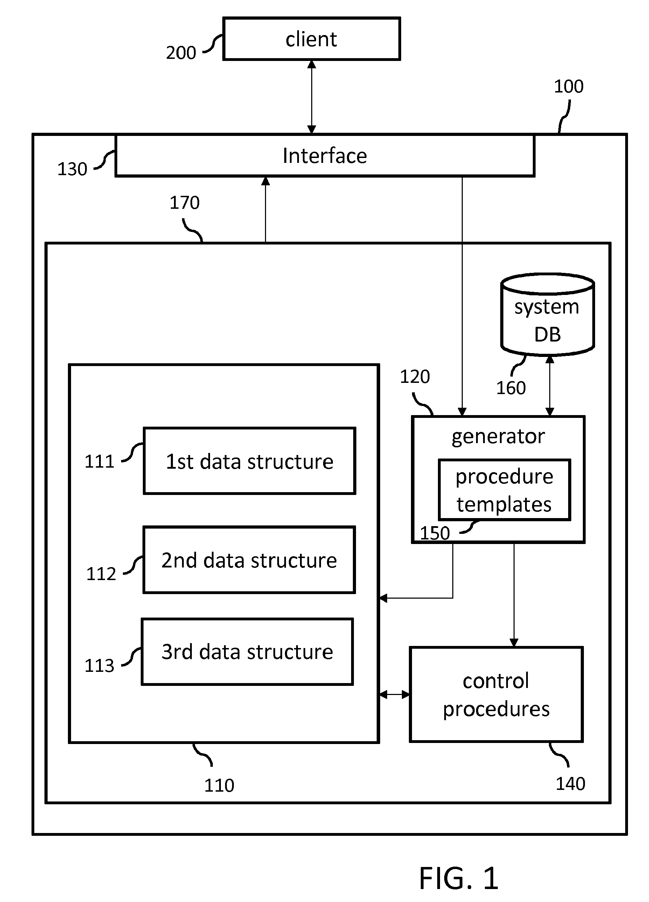

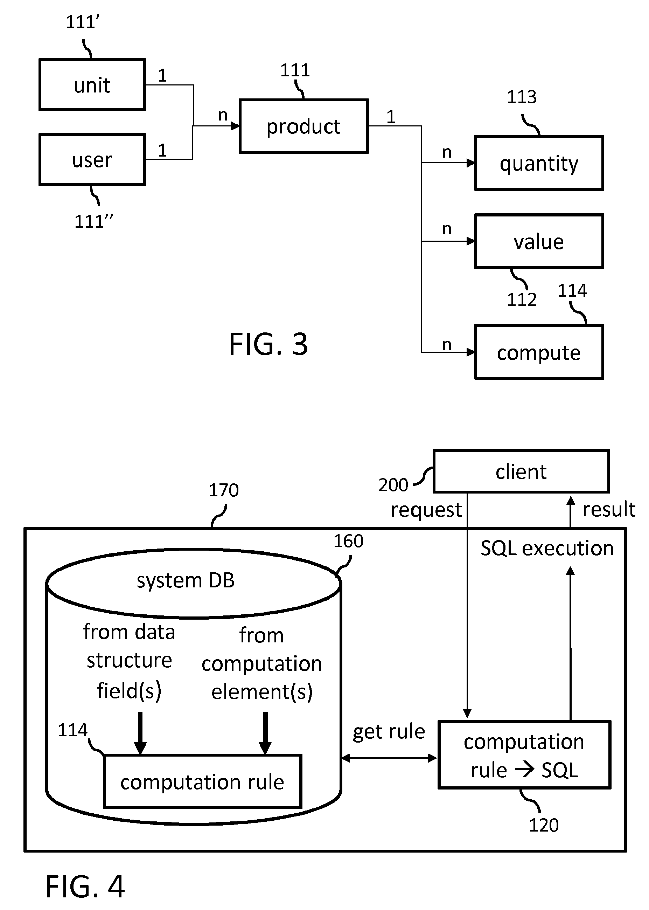

FIG. 1 is a simplified block diagram of a computer system 100 for planning support. FIG. 1 will be described by way of an example which is shown in FIG. 3. The example of FIG. 3 shows specific table instances of the data structures in FIG. 1.

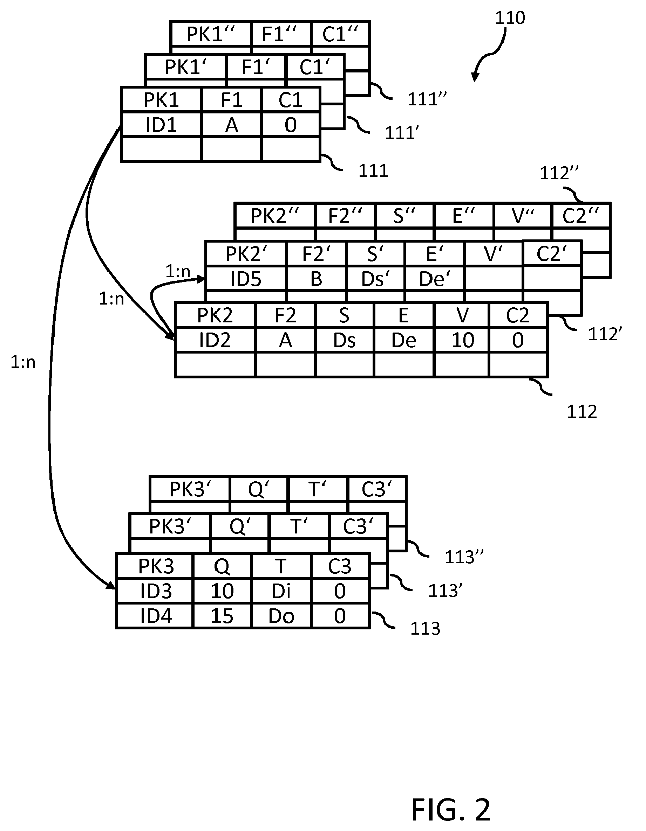

The example is based on an organization that has multiple units which are stored as respective data records in table "unit" 111', which is a data structure of the first type and may have a primary key and a character field UNIT in each data record. The organization further has users which are stored as respective data records in table "user 111 ", which is also a data structure of the first type and may have a primary key and a character field USER in each data record. The users may represent employees of the organization which are, for example, authorized to perform certain planning activities in the computer system 100. For example, there may be users in unit A of the organization, users in unit B of the organization and so on. For this purpose, users may use one or more client devices 200 which can be communicatively coupled with the computer system 100 via an appropriate interface 130. The purpose of the organization may be to produce and sell certain products. Such products may be represented by data records stored in the "product" table 111 which is also a data structure of the first type and may have a primary key and a character field PRODUCT in each data record. The "product" table may have a further field column APPROVAL which can be a flag (e.g., a field of type bit) to indicate if a certain data record is approved for planning purposes. For example, once the APPROVAL flag is set any further change of PRODUCT field in the respective data record may be prohibited. The APPROVAL column can be considered to be a control column (e.g., C1, cf. FIG. 2).

In the example of FIG. 3, there is a 1:n relationship between the "unit" table 111' and the "product" table 111. That is, one UNIT may be associated with multiple PRODUCTs. There is also a 1:n relationship between the "user" table 111" and the "product" table 111. That is, one USER may be associated with multiple PRODUCTs (e.g. for planning purposes).The expression "1:n relationship" is a commonly used term but does not indicate in this context that "n" has the same value in all of such relationships. Actually, "n" may correspond to a different number in each relationship.

Plan quantities for specific PRODUCTs can be stored in "quantity" table 113 which is a data structure of the third type. There is a 1:n relationship between the "product" table and the "quantity" table. That is, for each PRODUCT data record multiple plan quantity data records can be defined. For example, a user can use the client 200 to edit the respective plan quantity value Q (e.g., of type int or real, cf. FIG. 2) and the related time point T (e.g., of type time or date, cf. FIG. 2). The plan quantity values may also be received from a subsystem. For the same PRODUCT data record multiple Q values at different time points T can be defined.

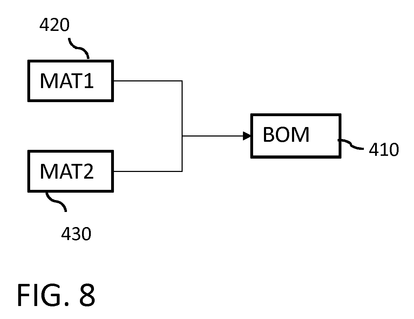

The "value" table 112 is a data structure of the second type. It may define a validity time interval [Ds,De] (cf. FIG. 2) for a certain product (e.g., A). Further, during this validity time interval a certain value V (e.g., of type currency to represent the product price "10" in a given currency, cf. FIG. 2) may be valid. There is a 1:n relationship between the "product" table 111 and the "value" table 112. That is, for the same PRODUCT data record multiple validity intervals with different values V can be defined. The definition of the validity intervals in the "value" table 112 is independent from the definition of time points T with specific plan quantity values Q in the "quantity" table 113. The respective value may be entered by a user through the client 200 or may be received from a subsystem. Further tables 112', 112" of the second type may be defined. Between tables of the second type 1:n relations may exist which can be used to define nested planning structures (e.g., for bills of materials). This is described in more detail in the description of FIG. 8.

The tables (any data structure of the first, second or third type) and their relations can be generated by a generator component 120 of the computer system 100 in response to information received from the client about respective fields and their purposes. For example, based on user inputs the computer system can generate the respective data objects. Further, the generator component 120 can generate a set of control procedures for the available data structures wherein each control procedure is based on a predefined, parameterized procedure template 150 and the respective type of the data structure 111, 112, 113. Such control procedures can be used for data manipulation purposes.

For example, a user may indicate through the client 200 that a table of type 1 for storing organizational units is to be created. In response to this request the generator 120 can generate the following data structure:

unit table:

| **table** | **Column** | **data type** | **auto increment** |
|---|---|---|---|
| unit | PID | Int | 1 |
| unit | UNIT | Varchar(80) | 0 |
| unit | UNIT_OK | Bit | 0 |

The table 111' "unit" therefore would be generated to include a column PID as its primary key having an integer type. The auto increment flag "1" indicates that with each creation of a new UNIT the PID key is automatically incremented for the new data record. The UNIT column can then store an 80 character string to name the unit and the control column UNIT_OK can set a status flag for the respective UNIT.

In a similar way the user can specify the" user" table of type 1 and the generator 120 can generate the respective data structure accordingly.

Regarding the "product" table 111 the 1:n relationships regarding the "unit" and "user" tables is specified by the user and taken into account by the generator 120 by generating the respective foreign key fields FID_UNIT and FID_USER as shown in the following example data structure of type 1 for the "product" table:

product table:

| **table** | **column** | **data type** | **auto increment** |
|---|---|---|---|
| product | PID | Int | 1 |
| product | PRODUCT | Varchar(80) | 0 |
| product | PRODUCT_OK | Bit | 0 |
| product | FID_UNIT | Int | 0 |
| product | FID_USER | Int | 0 |

As PRODUCT is a field for which plan quantities are to be captured, the system can now generate a table of type 3 to support the creation of such plan quantities for each PRODUCT. The system knows that a plan quantity table is of type 3 and the generator 120 can automatically generate the data structure for the "quantity" table 113 with a foreign key column FID_PRODUCT for the PRODUCT reference to take into account the respective 1:n relationship. For example, the creation of type 3 tables can be initiated by the system upon an indication (e.g., from a user or a subsystem) that for a particular field of a type 1 table plan quantities are to be stored. Thereby, a user may initiate the creation of a type 3 table and define the relation between the respective type 1 table and type 3 table (e.g., PRODUCT relates to FID_PRODUCT). This relation defines the level of plan quantity data in terms of the to-be-planned item. For example, if the relation is defined at the PRODUCT level this may also be the lowest level at which plan quantity data can be captured and/or visualized. However, aggregation to higher levels (e.g., product families or product groups) is possible.

quantity table:

| **table** | **column** | **data type** | **auto increment** |
|---|---|---|---|
| quantity | PID | Int | 1 |
| quantity | Q | int | 0 |
| quantity | T | Smalldatetime | 0 |
| quantity | Q_OK | Bit | 0 |
| quantity | FID_PRODUCT | Int | 0 |

Thereby a data record of the "quantity" table defines a plan quantity value Q for a specific point in time T for the data record FID_PRODUCT of the "product" table. There can be multiple data records of the "quantity" table being associated with the same data record of the "product" by referencing the same foreign key. For example, a production plan for a particular product may require different plan quantities for the same product at different time points in the future. That is, the system can store a specific plan quantity value for any arbitrary point in time by creating respective data entries in the quantity table referencing the same PRODUCT.

In one embodiment, the quantity table may also store historic quantity values for the PRODUCT. Such historic data can be historic plan quantities from already passed planning intervals stored in the Q column for passed time points or correspond to different versions of a plan quantity value at different points in time. For example, a history flag can be associated with a type 3 data structure. If the history flag is set the generator may create two additional columns for the respective type 3 table - e.g., a CHANGE_DATE column for recording any change date of the plan quantity value and a CHANGE_USER column for recording the user name of the user entering the change. As soon as a user is changing a plan quantity data record the system automatically is tracking the respective change accordingly. This allows at any point in time to retrieve all historic data of the type 3 table. Further, instead of creating a complete tracking version of all data records at constant time intervals (e.g., every two days) as it is usually done in classic planning support systems, the proposed solution according to this embodiment of the invention allows to store a complete version track of each field by simply storing history version data in case of an actual data change of the respective field. Therefore, the memory consumption of the proposed versioning method for change data is typically less than the memory consumption caused by the traditional way of regular version data creation.. That is, a table of type 3 can be configured to store any quantity value at any point in time for the respective planning object (e.g., the PRODUCT). The generator 120 may also create further tables of type 3, for example, for including a planning quantity history, actuals, open orders, plan quantities, capacities etc.. For every value on the time line the system may create further tables of type 3. Every such table may be used for comparisons between the tables.

Beyond the Q_OK control column, which has a similar function as the previously described OK control columns, there may be further control columns generated in the quantity table. For example, a control column THR may be used to control the display color of a quantity value in dependence of certain threshold definitions. That is, in case that a specific plan quantity value exceeds a predefined or a computed threshold value, which can be any other relevant quantity value, the THR column may control that the plan quantity value is displayed in yellow color if the deviation is still within a certain tolerance and in red color if the tolerance area is exceeded.

Further, the generator 120 can automatically generate the "value" table 112 as a data structure of type 2. This may be advantageous if for certain fields defined in type 1 tables validity periods are important. For example, this may be the case if for a certain item a value is valid only over a certain period of time and changes after this period. Again, the generation includes a foreign key column FID_PRODUCT for the PRODUCT reference to take into account the respective 1:n relationship. For example, "value" table 112 may have the following structure:

value table:

| **table** | **column** | **data type** | **auto increment** |
|---|---|---|---|
| value | PID | Int | 1 |
| value | V | currency | 0 |
| value | S | Smalldatetime | 0 |
| value | E | Smalldatetime | 0 |
| value | V_OK | Bit | 0 |
| value | FID_PRODUCT | Int | 0 |

Thereby, the S and E columns define the start and end points of the validity time interval for a data record (FID_PRODUCT) of the "product" table. There can be multiple data records of the "value" table being associated with the same data record of the "product" table through the respective foreign key FID_PRODUCT. For example, the price of a PRODUCT may increase in the middle of the planning year. For this purpose, a first value V1 can be stored for the first half of the year and a second value V2 can be stored for the second half of the year. Another example can be the change of components of a product. In this case the value table can include an additional field for the product component variants. A first variant may correspond to a component which is used up to a certain date. A second variant may correspond to the component used by the product after this date. The validity periods are then defined according to the date when the components are switched. For example, a product may use a certain cable which is supposed to substitute after the switch date by another cable with improved properties. This can simply be controlled by associating the various variants of the cable with the respective validity intervals.

The system database (system DB) 160 can be implemented as a database table and may store a register of all elements defined in the data structures of the system. That is, the system always knows for each field the respective type, table, relations, authorizations or other information relevant for characterizing or referencing the respective element.

The system DB 160 can also be used for the definition of optional computation elements 114 (cf. FIG. 3) which correspond to a virtual data structure of a fourth type. Computation elements of the fourth type can be compared to a virtual data structure in the sense that they do not exist as a real tables but the reference fields in real tables similar like a SQL table view. A table of type one (e.g., the product table 111) may have a 1:n relationship with a computation element 114. The computation element 114 has a computation rule (cf. FIG. 4) for defining a compute operation applied to one or more values. Each value can either be stored in any one of the data structures of the first, second, or third type or may be the output (result) of a further computation element. The system can generate the computation element 114 based on a specification about the computation to be performed. For example, a planning user of the system may specify that the result (e.g., sales volume) of a computation for a computed planning value regarding a PRODUCT shall be calculated based on the formula "sales volume" = V(value table) * Q(quantity value). The system will then create the respective computation element of type 4 with said computation rule, for example in the system DB. Such a computation element is automatically available for any PRODUCT defined in the product table 111. In case a request asking for a result of a specific computation element 114 is received by the generator 120 from the client 200 (cf., FIG. 4) the generator can get the respective computation rule from the specific computation element 114 in the system DB 160 and generates the corresponding SQL code. The generated SQL code can then be executed by the SQL server 170 and the result of the computation is sent to the client 200 in response to the original request. For example, based on the computation rule the generator can generate a respective SQL code which is automatically executed when the respective V and Q values exist for a PRODUCT. This leads to the virtual 1:n relationship between the product table 111 and the computation element 114 because there is a 1:n relationship to the "quantity" and "value" tables 113, 112 which provide the input parameters Q and V to the computation rule. Through the computation rule referencing source table fields the computation element is bound to the respective table fields providing the input variables for the computation. This allows instant computation of the result when the source table fields include values. Real time behavior is therefore achieved even in situations where a complex computation rule is applied in the moment the generated SQL code for the computation element is executed. Of course, a computation rule can also reference one or more source table fields from a single source table only. On the other hand, there is no limitation with regards to the number of different source tables being referenced by a computation rule.

The type of the result of a computation element can be determined on the basis of the type(s) of the computation parameter(s) according to predefined rules. The following rules shown in below table result types are examples. The person skilled in the art can define additional rules. For example, when applying a mathematical computation operator (e.g., "+","-"," *","/", square, square root, etc.) to fields in type 1 tables the result will be treated like a field of a type 1 table again. However when the operator is applied to a type 2 table field and a type 1 table field the result will be treated like a type 2 table field (value field). If the operator is applied to a type 2 table field and a type 3 table field the result will be treated like a table 3 table field (planning). That is, in terms of the type of the result of a computation element some table types prevail over other table types.

result types table:

| **1^{st} computation parameter type** | **2^{nd} computation parameter type** | **computation operator (math operator or function)** | **RESULT type** |
|---|---|---|---|
| 1 | 1 | "+","-",*","/", | 1 |
| 2 | 1 | "+","-",*","/", | 2 |
| 2 | 3 | "+","-",*","/", | 3 |
| 3 | 3 | "+","-",*","/", | 3 |
| 2 | 2 | "+","-", *","/", | 2 |
| 3 | 3 | timeadd() | 3 |

For example, the computation rule can automatically take into account the validity intervals as defined in the "value" table 112 and make sure that the plan quantity values Q for product A in the "quantity" table 113 at specific time points T are multiplied only with values V of the "value" table which are valid at the specific time points T. For example, the price for a period from March to September for snow tires may be different from the price for a period from October to February. The result of the computation may itself be used as input for another computation rule of another computation element. The last example row in the result types table refers to a computation rule for type 3 tables using a function as computation operator. However, in this example the plan quantity values of the type 3 table are not touched by the computation function "timeadd()". Rather, the computation function adds a specified time interval (e.g., a certain number of days or weeks) to the values of the time column of the type 3 table. This corresponds to a time shift of the plan quantities without a need to create any additional data records.

The following pseudo code examples demonstrate the use of computational elements in the context of queries.

Computation element example 1 - query on a type 4 field:
select
Q*V as sales
, quantity.T as date
, Q_OK as SALES_OK
, Q_mark1 as SALES_mark1
, Q_mark2 as SALES_mark2
, Q_mark3 as SALES_mark3
from product
inner join quantity on product.PID = quantity.FID_PRODUCT
inner join value on product.PID = value.FID_PRODUCT
and quantity.T >= value.S
and quantity.T < value.E

This query uses a computation element defining sales as the product of the plan quantity defined in the table "quantity" and the price value V defined in the table "value". In addition to the columns of the quantity table shown in the above table example further control columns Q_mark1 to Q_mark3 are defined for this example. Depending on the status of the bits of the respective control columns the query can, for example, color-code the computed sales values if the respective SALES_mark bits indicate a relevant deviation from a predefined value within the defined period, thus improving user interaction with the system. For the comparison to identify such deviations separate procedures are used.

Computation element example 2 - query for aggregation on a yearly basis:
select
sum(Q*V) as Umsatz
, year(quantity.T) as period
, max(Q_OK) as SALES_OK
, max(Q_mark1) as SALES _mark1
, max(Q_mark2) as SALES _mark2
, max(Q_mark3) as SALES _mark3
from product
inner join quantity on product.PID = quantity.FID_ PRODUCT
inner join vlaue on product.PID = value.FID_ PRODUCT
and quantity.T >= value.S
and quantity.T < value.E
group by year(Q.T)

This query performs a similar function as the query of example 1 wherein a computation element is used which aggregates the computed sales figures on a yearly basis. In this example, the SALES_mark control bits of all planning values are aggregated. This may be done according to a rule that always the maximum of all control bits in a respective control column within the queried time interval is used. That is, in case a single sales value within the aggregation period (e.g., year) has a deviation leading to a control bit value of 1 (indicating a non-standard status) this value will be used for the whole period. This can lead to a color-coding of the whole period according to a corresponding control column flag for single value during this period. Such color coding supports the planning user by quickly identifying aggregate values which include individual values showing relevant deviations. The user can then perform a drill down on the highlighted respective aggregate value to quickly identify the single value(s) being the root cause for the color coding. Again, user interaction is improved.

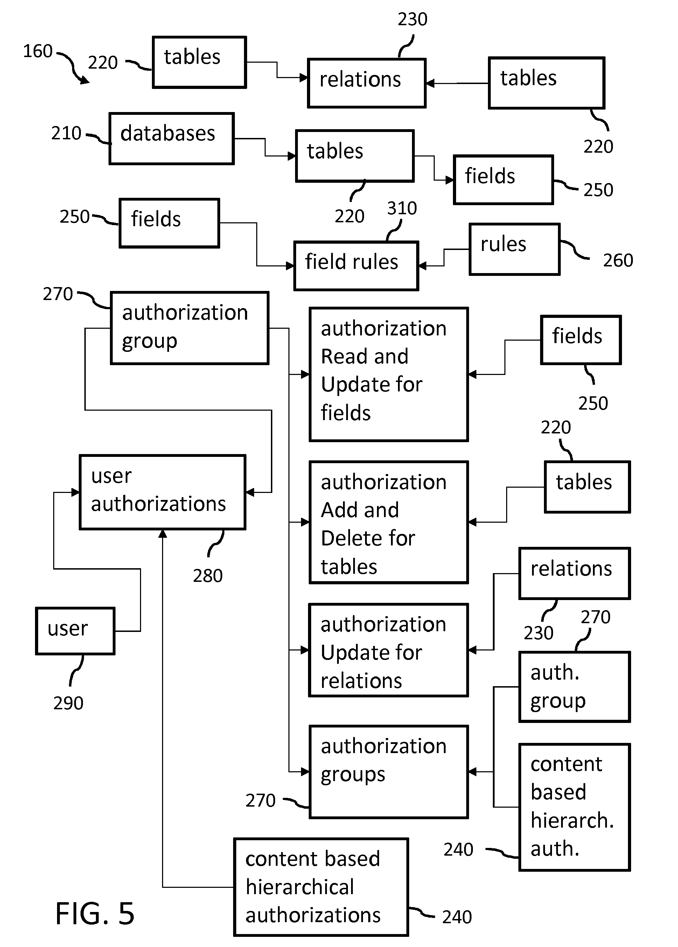

The generator 120 can further create control procedures 140 (cf. FIG. 1) for manipulating the available data structures by using respective procedure templates 150 describing the structures of the control procedures. For example, a basic set of control procedures may include for each database table an add procedure and a delete procedure, as well as an update procedure for each table field. Further, a generic read procedure may be used to generate a read query according to a user request targeted to any arbitrary table field. The ensemble 170 (cf. FIG. 1) including the generator 120 using the procedure templates 150 and the system DB 160, the data structures 111, 112, 113 (which may have been created by the generator), and the control procedures 140 (generated by the generator for the respective data structures) can be seen as a SQL server 170 which finally provides responses to the client 200 requests through the interface 130. In general, for add, delete and update control procedures the generator can generate corresponding SQL texts with procedural components (e.g., Transact-SQL statements which allow to include procedural statements like, for example, "if ... then" or "loop") based on the respective function, table or field names, user names, authorizations, relations and any other rules specified in the system DB. The procedural SQL text may then be executed by the SQL server to generate the control procedure. Procedural statements may also be defined in other programming languages such as the common language runtime of the MICROSOFT .NET environment or other procedural programming languages and can then be compiled into the SQL statements. More details regarding the authorization aspects are disclosed in the context of FIG. 5.

For example, once the generator has created the product table 111 according to a respective request from the client 200 the generator can also generate the respective control procedure cp_product_add for the product table 111 for adding a new data record to the product table by using an appropriate procedure template.

In the context of the example of FIG. 3, cp_product_add may use the primary key and foreign keys of the "product table" as input parameters:

| **input parameter** | **data type** | **default value** |
|---|---|---|
| @PID | int | 0 |
| @FID_UNIT | int | 0 |
| @FID_USER | int | 0 |

The output parameters can be:

| **output parameter** | **data type** | **output value** |
|---|---|---|
| @PID | int | PID of new data record |
| ReturnValue | int | 0 for error, 1 for success |

If @PID has its default value 0 a new row (data record) is to be created in the product table 111 according to the following pseudo code statement (which can, for example, be generated as a procedural SQL statement, that is an SQL text with procedural extensions):
if @PID=0 then
insert into product (FID_UNIT, FID_USER) values (@FID_UNIT, @FID_USER)

As specified in the product table example above the PID of the product table will be automatically incremented when a new data record is created. The statement indicates that the values (@FID_UNIT, @FID_USER) for the foreign keys of the new data record are to be inserted into the respective columns (FID_UNIT, FID_USER) of the product table. Foreign keys can be provided to the add procedure cp_product_add as an optional parameter. For example, a control element in the client 200 may check the uniqueness of a foreign key and, in case the foreign key is unique provide it to the add procedure and otherwise suppress it.

The cp_product_add procedure is also usable in cases where, for example, an existing PRODUCT is shifted to the responsibility of another planning user or business unit. In this case @PID is different from 0 and relates to an already existing data record. The following pseudo code statement can be used to update the respective foreign key:
if @PID <> 0 then
update product set FID_UNIT=@FID_UNIT, FID_USER=@FID_USER where PID=@PID

The generator can also generate the respective control procedure cp_product_delete for deleting an existing data record from the product table.

The input parameter indicates the data record to be deleted:

| **input parameter** | **data type** | **default value** |
|---|---|---|
| @PID | int | 0 |

The output parameter can be:

| **output parameter** | **data type** | **output value** |
|---|---|---|
| ReturnValue | int | 0 for error, 1 for success |

The functional pseudo code of the cp_product_delete procedure can be:
delete product where PID=@PID.

The generator can also generate the respective control procedure cp_PRODUCT_update for updating the product description in the PRODUCT field in the product table.

The input parameters indicate the data record to be changed and the new product description:

| **input parameter** | **data type** | **default value** |
|---|---|---|
| @PID | int | 0 |
| @NEW_PROD_D | Varchar(80) | |

The output parameter can be:

| **output parameter** | **data type** | **output value** |
|---|---|---|
| ReturnValue | int | 0 for error, 1 for success |

The functional pseudo code of the cp_PRODUCT_update procedure can be:
update product set PRODUCT=@ NEW_PROD_D where PID=@PID.

The previously described features can easily be generated during the system design phase of the planning support system because the generator knows the structure of the respective tables at the time the procedures are created. Therefore, the respective SQL statements can be created as static statements where no later change is necessary. As a consequence, the SQL server can optimize resource consumption and performance for predefined static SQL procedures which would not be possible in case of SQL procedures being dynamically generated at runtime.

Further control procedures can be generated for each field in the table. For example, if an APPROVAL field is part of the "product" table which indicates that a product is approved for planning a respective control procedure cp_APPROVAL_update for updating the approval field can be generated. The description will later explain how the generated control procedure can be associated with user authorizations so that the respective control procedure can decide if the user is entitled to perform the respective control procedure or not dependent on the authorization of the current user.

In the case of the read procedure the situation is more complicated because it does not belong to the group of control procedures which can be already predefined during the system design phase. The user of the system defines at runtime, for example on the client, which information he or she is interested in. The generator cannot know this user desire in advance. Therefore, the read control procedure for a specific information request is created dynamically by the generator in response to the user's information request and based on the authorizations of the user. Because of this dynamic nature the read procedure is generic in the sense that it does not depend on a specific data structure but rather is composed at runtime to match the information request. All relevant information about the fields of interest and their respective data structures and properties can be found by the generator 120 in the system DB 160. For example, the generic read procedure cp_read may receive the following input parameters:

| **input parameter** | **data type** | **default value** | **example value** |
|---|---|---|---|
| @FIELDNAMES | Nvarchar(4000) | none | #unit#user |
| @DATAFIELDS | Nvarchar(4000) | "" | Q |
| @FILTER | Nvarchar(4000) | "" | Products like "A%" |
| @ORDERBY | Nvarchar(4000) | "" | "" |
| @FROM | Smalldatetime | "" | 1.1.2013 |
| @TO | Smalldatetime | "" | 1.1.2014 |

With the values shown in the "example value" column of the above input parameter table a read query can be generated (e.g, a SQL query) which provides the plan quantity per unit and user for products starting with "A" during the planning year 2013. A more complex read procedure is shown in the following pseudo code example:
exec @xresult= aireadhwQ @USER=current user
, @FILTERr= PRODUCT like "A%"
, @FIELDNAMES='0#UNIT#PRODUCT' 0 stands for "not to be grouped"; 1 stands for values "to be grouped"
, @ DATAFIELDS ='Q#SALES'
, @FROM='1.1.2013'
, @TO='1.1.2014'
, @INTERVAL=1,2 for year, 3 for smallest period in months,4 for smallest period in weeks
, @ ORDERBY ='desc product'

The pseudo code example relates to a read query which allows the grouping of plan quantity and sales values according to units or products for the year 2013. Thereby a further breakdown can be performed according to the defined time interval (grouping by sub periods in the year 2013).

The output record set of cp_read may be defined dynamically in response to the requested data and, in case of the example, may include the following columns

| **UNIT** | **USER** | **Q** | **Q_OK** | **Period** |
|---|---|---|---|---|
| U_A | Jack | 3100 | 0 | 2013 |
| U_A | Mark | 2900 | 0 | 2013 |
| U_B | Alice | 4300 | 1 | 2013 |
| U_B | ... | ... | ... | ... |

The period values may be different if the interval parameter (pseudo code example) is not indicating a yearly grouping. For example, if the interval parameter indicates a monthly grouping the period values may appear like "1/2013", "2/2013", etc.

Outputs of the control procedures can be interpreted as responses of the SQL server 170 to the client 200.

The planning support system can include further control procedures for performing specific planning and/or display functions. For example, a disaggregation procedure can be applicable to plan quantity fields in type 3 tables. A drill down procedure may be configured to allow an aggregation of the respective plan quantities over selected time intervals or intervals of other dimensions (e.g., products, users, etc.). The aggregate plan quantity value (e.g., all plan quantities for PRODUCT P_A summed up for all periods of 2014) may now be changed/adjusted by the user. The disaggregation procedure can then distribute the changes over the original plan quantities entries in the respective type 3 table. For example, this may occur according to the ratio of the existing plan quantities. If the quantity table includes two plan quantities for a specific product in the year 2014: 400 on 1.1.2014 and 600 on 1.7.2014 the user may increase the plan value for the whole year to 1200 which means an increase of 200. The disaggregation procedure can then distribute a change for the year to the respective plan quantities according to the overall ratio. In the example 40% of the additional 200, that is 80, is added to the plan quantity on 1.1.2014 and 60%, that is 120, is added to the plan quantity value on 1.7.2014. Thereby the original plan quantities are overwritten by the procedure. In case a history flag is activated the old values may be kept as a history version and the change as well as the user causing the change can be tracked in respective columns of the quantity value as described earlier. Of course, any other disaggregation function may be supported by a corresponding procedure.

FIG. 5 illustrates details of the system DB 160 according to one embodiment of the invention. As disclosed earlier, the system DB 160 can include a table 220 for defining the tables (data structures) of the planning support system. A relations table 230 can be used to define for each table of table 220 a relation with any other table of table 220. Further, the system DB can have a table 210 for defining various databases. For example, one database may be used for defining a test system and another database may be used for defining a production system. The system DB further includes the definitions of which table of table 220 belongs to which database of table 210 and also a table 250 for defining the fields of the tables and their respective behavior as explained earlier.

The system DB further may include a rules table 260 which includes rule definitions in relation to data content or values of the data records. The rules 260 can be assigned to table fields by using the field rules table 310. The field rules table is a mapping structure which allows assigning multiple rules to a particular field and multiple fields to a particular rule (e.g., by storing pairs of respective foreign keys). For example, a product table may include a PRODUCT field and further property fields for a particular product. As an example, a PRODUCT "bicycle A" may have the properties type, size and color. A rule assigned to the PRODUCT field may check if all properties of the product are completed. If the properties are incomplete the rule can prevent setting a respective OK flag for "bicycle A" in a corresponding control column. For example, in case type="mountain", size="26" and color=" ", the rule recognizes a missing property and the corresponding OK flag is not set. The user may then update the data record with color="blue". The rules are also taken into account when generating the control procedures of the system. In other words, add, delete, update or other control procedures can include admissibility clauses being associated with a particular data structure field (e.g., product field). The admissibility clause is configured as a rule for determining the admissibility of datasets associated with the particular data structure field. That is, in the context of the example, the update procedure includes a respective SQL clause to immediately validate the change which has been applied by the user to the product properties according to the rule. If the change is admissible the system performs the update. If the change is inadmissible according to the rule the change will be rejected. Using admissibility clauses implementing field content related rules enables the planning support system to automatically perform data consistency checks with regards to the content of values of data records. For example, if the user selects color="red" but red is not an admissible color for "bicycle A" the change will be rejected by the rule and no OK flag will be set for the respective data record.

The system DB can further include the definition of content based hierarchical authorization rules. In the content based authorization table 240 content based hierarchical authorizations can be defined and can then be combined with field and/or table authorizations. Content based authorizations are authorizations in relation to the content of data records and will also be referred to as horizontal authorizations. Field/table authorizations relate to tables or columns of any one of the data structures of the planning support system and will also be referred to as vertical authorizations. Horizontal and vertical authorizations can be combined directly at the level of user authorizations 280 or at the level of authorization groups 270. For example, field and table authorizations can be organized in authorization groups 270. Such an authorization group can contain add and delete authorizations for tables, read and update authorizations for fields, update authorizations for relations and further authorization groups. If an authorization group 270 is related to another authorization group 270, a combination may be defined with a content based hierarchical authorization. A combination between an authorization group 270 and a content based hierarchical authorization 240 can also be defined, when an authorization group 270 is assigned to a user 290 at the level of the user authorizations 280. The example system DB 160 shows a complete definition of the planning support system with users 290, databases 210, tables 220, fields 250, relations 230, rules 260 and the definition of the authorization model. In other words, the example system DB shows an embodiment of the data model used by the planning support which is ready to be used for running a respective planning application. The conception and creation of this data model can be considered as the design time of the data model while the use of the data model in the planning application can be considered as the runtime of the data model.

The data structures of the system DB 160 can be built by using the same logic, which is described in the context of creating the previously describe data structures of the planning system. This demonstrates that the design of the data model is done while the planning support system is already executed at system runtime. The system runtime is to be distinguished from the planning application runtime as described above. The data model design time occurs at system runtime. That is, every field in the system DB 160 can correspond to a data structure of type 1. To update the system DB, the same components can be used as described with FIG.1. The client 200 may serve as the user interface. The system DB is built in the backend computer system 100 which acts as the server.

In other words, the authorization groups define vertical authorizations 270. A vertical authorization in the context of this description is an authorization which relates to a column of any one of the data structures of the planning support system. That is, a vertical authorization may relate to any field, table or relation which is defined in the system DB. For example, foreign key columns are typically not known by the user because they are created by the system when generating the respective tables and relations. Therefore, the user cannot directly modify a foreign key manually. However, relations are defined by users of the system. This is similar to performing a database table update. The proposed system supports relation authorizations as a separate type of authorizations in the sense that it is possible to indicate the authorization of a user for creating such relations between two records in two different tables which have a defined relation between each other.

Such vertical authorizations 270 can then be combined with horizontal authorizations 240. A horizontal authorization in the context of this description means an authorization in relation to the content of data records (content based hierarchical authorizations 240). For example, products of a certain product group may only be created by users of a specific business unit. Such a constraint cannot be implemented by vertical authorizations only.

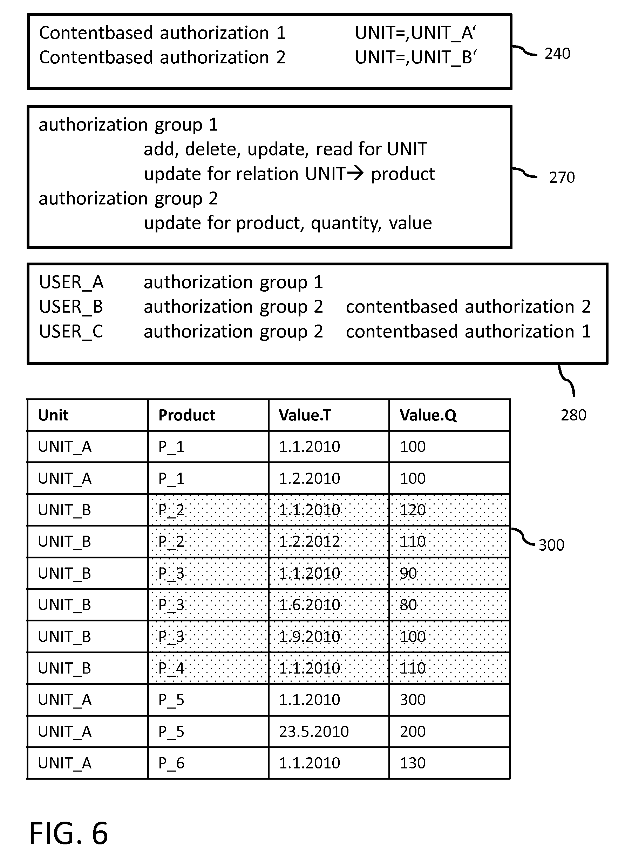

FIG. 6 shows a specific example of using content based hierarchical authorizations according to one embodiment of the invention. In particular, FIG. 6 shows the combination of authorization groups and content based hierarchical authorizations. This combination can be done at the level of authorization group 270 or at the level of the user authorizations 280. In the example there are two content based authorizations: UNIT='UNIT_A' and UNIT='UNIT_B', and two authorization groups: authorization group 1 and authorization group 2. USER_B is assigned to authorization group 2 in combination with the content based authorization 2. This defines the access rights of USER_B. Through authorization group 2 USER_B has only update authorization rights for the fields product, value and quantity. Without content based authorizations, USER_B could update all records in these fields. But the content based authorization constraint limits the access rights to only those records which are related to a record that is queried by the statement of the content based authorization 2, that is, UNIT='UNIT_B'. USER_B has update access rights to all products, which are related to UNIT_B. In the example, the final authorization, regarding which records and fields can be updated by USER_B, is shown in table 300. The cells of table 300 with a dotted background show the data records which USER_B is allowed to update. The field constraints are defined by the first part of the respective authorization 280 for USER_B (authorization group 2). The record constraint is defined by the second part of the authorization 280 for USER_B (content based authorization 2).

Every field of any data structure in the system can be used in a content based authorization constraint statement. Every field, table and relation authorization can be combined with such a content based authorization.

As a consequence, for a field which is used in an authorization group in combination with a content based authorization, the access rights to the records of the respective table are automatically constrained by the content based authorization.

This logic can be used to build release workflows. For example, there can be a bit data structure of type 1, which shows a release of a particular activity. If it is released nobody should be able to change the corresponding data anymore. This constraint can be defined in an authorization group in combination with a content based authorization. The authorization group includes all fields which have to be released. The content based authorization may define, for example, flag 'release=0'. The update authorizations for the fields, which have to be released are combined with this content based authorization. The user can update the fields as long as the flag field 'release =0'. If the flag is switched to 'release=1', the user has no update authorization anymore for the fields in the authorization group. As a result, the authorization of the user has changed because of changing data by a user.

As a consequence, horizontal authorizations 240 for database records allow defining content based authorizations which may be evaluated at runtime at an arbitrary granularity. In other words, it is not necessary at the time of defining the authorization groups to know all kinds of future authorizations. It is sufficient to know that the authorization to update the product field or product table also depends on which user from which unit is allowed to change which product. This is taken into account by defining respective constraints in the system DB. Based on the actual content of the respective fields at runtime the authorization can be defined at a high granularity.

This logic is enforced in the backend system 100. For read operations the definitions can be enforced with dynamically created TSQL text. For add, delete and update operations the generator 120 creates control procedures in which the logic is enforced.

The following pseudo code example illustrates the implementation of horizontal (content based) authorizations in a generated control procedure cp_product_update for updating products. The following code example relates to the example given in FIG. 6.

Pseudo code cp_product_update procedure:

```
 Procedure cp_product_updateQ:
 @PID int,
 @newValue varchar(50)
 as
 declare @a int
 declare @b int
 declare @c int
 declare @oldValue varchar(50)
 declare @user varchar(80)
 set nocount on
 set tran isolation level serializable
 begin tran
 set @c=0
 select @oldValue = PRODUCT from product where produdt.pid=@PID
 if user = 'global\Admin'
       begin
        set @c=1
       update product set PRODUCT = @newValue,PRODUCT_OK=1
       where product.PID = @PID
       end
 if user = 'USER_C'
       begin
        set @c=1
       if not exists(select product.PID from product
               left join unit on product.FID_UNIT = unit.PID
               where product.PID = @PID and (unit='UNIT_A'))
               begin
               rollback tran
               raiserror('You do not have the necessary authorizations. You
               are only allowed to modify data in relation to
               Unit=UNIT_A',16,1)
               return
               end
       else
               begin
               update product set PRODUCT = @new_Value, PRODUCT_OK=1
               where product.PID = @PID
               end
               if not exists (select product.PID from product
               left join unit on product.FID_UNIT = unit.PID
               where product.PID = @PID and (unit='UNIT_A')
                      begin
                      rollback tran
                      raiserror('You do not have the necessary
                      authorizations. You are only allowed to modify data in
                      relation to Unit=UNIT_A',16,1)
                      return
                      end
       end
 if user = 'USER_B'
       begin
        set @c=1
       if not exists(select product.PID from product
               left join unit on product.FID_UNIT = unit.PID
               where product.PID = @PID and (unit='UNIT_B'))
               begin
               rollback tran
               raiserror('You do not have the necessary authorizations. You
               are only allowed to modify data in relation to
               Unit=UNIT_B',16,1)
               return
               end
       else
               begin
               update product set PRODUCT = @new_Value, PRODUCT_OK=1
               where product.PID = @PID
               end
               if not exists (select product.PID from product
               left join unit on product.FID_UNIT = unit.PID
               where product.PID = @PID and (unit='UNIT_B')
                      begin
                      rollback tran
                      raiserror('You do not have the necessary
                      authorizations. You are only allowed to modify data in
                      relation to Unit=UNIT_B',16,1)
                      return
                      end
       end
 if @c=0
       begin
       rollback tran
       raiserror('You are not authorized to change this data',16,1)
       return
       end
 commit tran
```

For generating a control procedure (e.g., cp_product_update) the generator is configured to derive from a hierarchical content based authorization definition for each user (e.g., unit = UNIT_A for USER_B) in the system DB which tables and which fields are needed to query the content based authorization at runtime. For the above cp_product_update example the product table is needed. However, the unit constraint also needs to be taken into account in order to generate the respective constraint clauses (e.g., SQL where clauses) in the control procedures. Such constraint clauses implement the fine granular horizontal authorizations to restrict a user's access to certain data records in combination with the vertical authorizations.

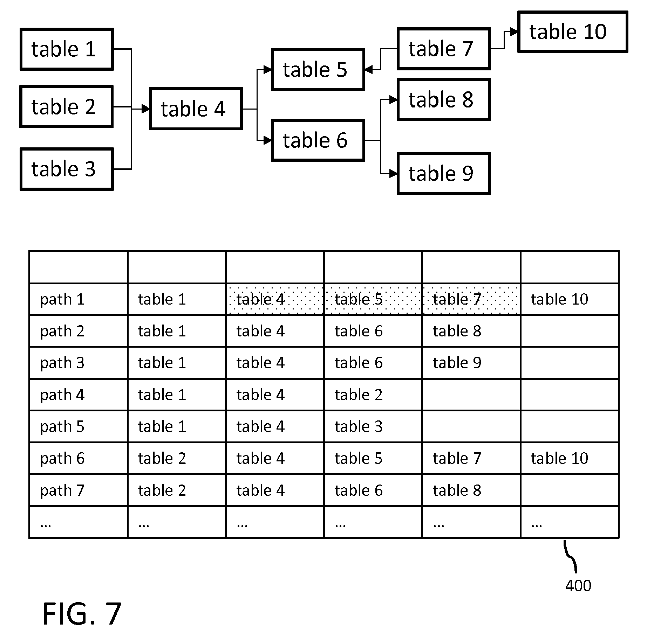

In the above example the control procedure is configured to update the PRODUCT name of a product with the identifier @PID with a new value @newValue. The generator generates a set of variables needed for the procedure and determines the old value @oldValue from the product table. In case the current user is the administrator Admin the update is simply performed. However, for other users the horizontal constraint clauses are generated into the procedure. For the user USER_B the update is not allowed if the product is not assigned to unit UNIT_B. In this case an error message is output to the user. Otherwise the PRODUCT is updated with @newValue. It can be an advantage to test also the new data record with regards to the hierarchical content based authorization of the user because the user should also not be allowed to enter new data outside his or her area of responsibility. For this reason the updated record can also be checked with a respective constraint clause and a rollback of the transaction may be performed if the constraint clause conditions are not met by the current user for the updated data record. FIG. 7 illustrates possible paths in a complex data model according to an embodiment of the invention. In cases where a system has a lot of tables (e.g., tables 1 to 10) and relations, it can become very complex to build the necessary SQL string to enforce the content based authorization. The system has to check all possible paths (combinations of tables with their relations) of the data model in order to find the right SQL "from" clause for implementing the content based authorization. Not only the combination of tables may be relevant, but also the order of the tables along the relations between the tables. The identification of potential paths through the data model may be time consuming and computationally expensive. As add, delete and update control procedures can be generated by a background process of the computer system at design time of the data model there is no negative impact on system response times for a user. It is to be noted that the design time of the data model refers to a time where the planning support system is already running but the data model for the planning application does not yet exist or is at least not yet completed. However, read control procedures are dynamically generated at runtime (execution of the planning application) in response to a corresponding user request. Therefore, it is advantageous to accelerate read control procedure generation because the user is waiting for a quick system response while running the planning application. The generation of read control procedures can be accelerated by the system by preparing all possible paths through the data model already at design time or at a time when the user is not waiting for a response. That is, beginning with a particular table of the data model the system goes along the defined relations to the next related table. To identify a complete possible path, this is repeated until there is no further relation found any more. The system does not go back to a previous table which is already included in the currently identified path. If the system finds no more relation, the path can be saved in a matrix 400 (e.g., path 1: table 1 → table 4 → table 5 → table 7 → table 10). Any other suitable data structure for persisting path information may be used. Then the system searches for the next possible path, and may try to find another relation to another table (e.g., path 2 includes table 4 → table 6). If there is no other relation found, the system can try to find a different possible combination/path than before. This procedure can be repeated until no further path can be found anymore. The example in FIG. 7 illustrates multiple possible paths for a particular data model including tables 1 to 10. The possible paths can be stored in the path data structure 400.

To build an SQL string for a read control procedure where multiple tables are needed to answer a user's request the system can search for the path in which all necessary tables are included. Then the system can simply keep the portion of the identified path from the first required table to the last required table and cut the remainder portion(s) from the identified path. The portion from the first required table to the last required table includes the order of all tables required to generate the "from" clause of the respective SQL statement for the read control procedure. In the example table 4 and table 7 are assumed to be necessary tables for answering a user read request. The system identifies path 1 in the path matrix 400, including all necessary tables. The start portion (table 1) and the end portion (table 10) can be cut from the identified path because they are not needed for the query (SQL statement) generation. The necessary portion of path 1 is highlighted with a dotted background pattern.

To summarize, different users of the planning support computer system may have different authorizations to access or manipulate the data structures and fields of the computer system. The authorizations of a user may be restricted to specific fields and datasets of the various tables even in combination with other authorizations on further organizational or technical constraints. The respective content based authorizations can be stored in the system DB. For this purpose a hierarchical authorization rule may constrain a user's authorization with regards to access rules for a specific data structure field by means of a constraint clause. The generator can generate a corresponding constraint clause in corresponding control procedures to restrict the access of the user to a subset of datasets which complies with the restriction imposed by the constraint clause. The definition of the constraint clause is thereby independent of the existence of the specific data structure field. In other words, a constraint clause can already be defined even if the respective field has not been created yet. The computer system behaves as if the user has authorizations for specific datasets associated with certain fields of certain tables which would be selected by a corresponding SQL statement using a specific where clause.

The combination of vertical authorizations with horizontal content based authorizations allows an elegant handling of very complex authorizations at a fine granular level. The maintenance of such complex authorizations becomes less complex as only the respective rules need to be maintained in the system DB for the various users or user groups. The generator can then automatically generate the corresponding constraint clauses into the control procedures of the system taking into account any possible relation. Thereby the generator identifies all relevant tables and fields based on the relations defined between the data structures and composes constraint clauses reflecting the constraint rules in the system DB.

FIG. 8 illustrates a specific example of data structures supporting bills of material according to an embodiment of the invention. For this purpose the system includes at least 3 data structures. BOM 410 is a data structure of type 2 where in addition to the 'start' and 'end' column an 'amount' column is defined. The BOM table 410 can be used to implement a bill of material in the planning support system. MAT1 420 is a data structure of type 1 and can store products with their properties. MAT2 430 is a data structure of type 1 and shows the same data as MAT1. For example, in the system DB MAT2 is defined as a view of MAT1. That is, the system does not create a further table, but just a view on MAT1 named MAT2. The columns of MAT2 can be named as defined in view data structure MAT2 but show the data of MAT1. The system perceives MAT1 and MAT2 as two different data structures but actually there is only one table MAT1. MAT2 only shows the data of MAT1. Using this data model an endless hierarchical structure, like a Bill of Material is possible. A classic data model of the tables MAT1 and BOM with relations for implementing parent child relationships between products and components to reflect a bill of material would show a circular reference The suggested data model of the data structures MAT1, MAT2 and BOM does not include circular references because MAT1 and MAT2 are two different database objects. That is, two products listed in MAT1 may have a parent-child relationship. In the classic data model such a parent-child relationship can be defined by a simple assignment structure referring to the respective data records of the parent and child in MAT 1. However, for the automatic generation of the control procedure such a data model causes a problem because dynamic SQL creation does not run with a circular reference as it would result from the classic data model. Therefore, a data model with data structures supporting dynamic SQL creation stores an original data structure 420 of the first type and a view data structure 430 of the first type. The view data structure 430 references the field values stored in the original data structure 420. Further, a bill of material data structure 410 of the second type is stored. The bill of material data structure 420 has a relation with a data record of the original data structure for defining a parent component and further has a relation with a data record of the view data structure 430 for defining a child component of the parent component. This data model allows using different foreign keys for the parent-child entries in the bill of material data structure because they now originate from two different database objects. This is a prerequisite for error free dynamic SQL creation when the respective control procedures are generated by the generator component.

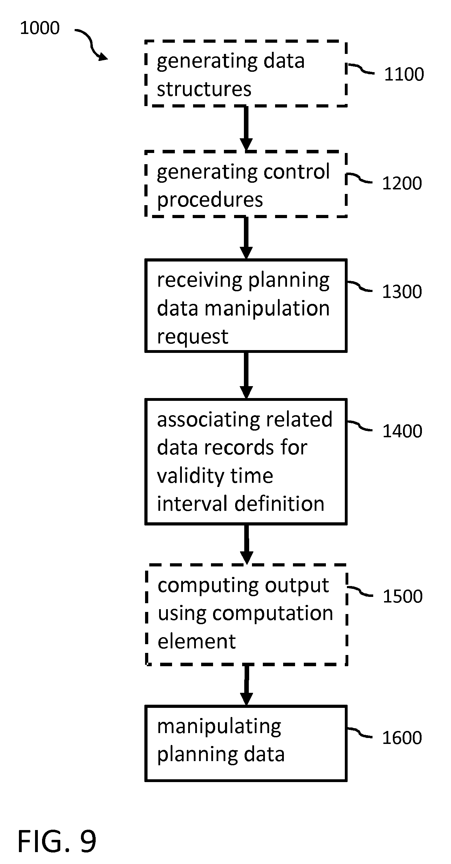

FIG. 9 is a simplified flowchart of a computer implemented method 1000 for planning support according to an embodiment of the invention. Dashed frames illustrate optional method steps. The steps receiving 1300, associating 1400 and manipulating 1600 enable the use of the planning support system for planning purposes based on the data structure setup of the planning support system. Therefore, those steps can be considered as describing the system behavior at run time.

The method 1000 includes receiving 1300 from a client a request for manipulating planning data record in a third data structure of a third type. The third type defines the third data structure by at least a third primary key column, a quantity column, and a point in time column. The planning data record of the third data structure defines a plan quantity value for a specific point in time for a related data record of a first data structure of a first type having at least a first primary key column and a first field column. The method 1000 continues with associating 1400 the related data record of the first data structure with a further data record of a second data structure. The further data record defines a validity time interval for the related data record of the first data structure. The second data structure of a second type has at least a second primary key column, a second field column, a start column and an end column. The method 1000 continues with manipulating 1600 the planning data record for a specific point in time independent from the respective validity time interval in accordance with the request. Details regarding the implementation of the method steps are described in the earlier disclosure of the planning support system.

By using the computer implemented method 1000 it is possible to store planning data in an efficient manner and avoid memory consumption through unused data cells. This reduces the memory consumption especially in cases where a planning time horizon includes various planning intervals with different planning interval granularities. In cases of a high planning granularity (e.g., on a daily or even hourly basis) huge memory savings can be achieved. Further advantages of the method 1000 have been described earlier in the context of planning support system which executes method 1000.

The optional generating steps 1100, 1200 describe the generation of the planning support system (data structures and corresponding control procedures) at design time (prior to the manipulating of planning data). Thus, the generating steps may also be considered as initialization steps in the method 1000 to set up the planning support system for runtime use.

In a first initialization step the system generates 1100 the data structures and their relations in response to information received from the client about respective fields and their purposes. Details have been described earlier. In a second initialization step the system generates 1200 a set of control procedures for the available data structures. Thereby a control procedure may be based on a predefined, parameterized procedure template and the respective data structure as disclosed in detail in the context of FIGs 3 to 7. The automated generation of control procedures can take into account content based hierarchical authorizations already during the initialization phase of the planning support system which allows fast evaluation of the content based hierarchical authorizations at runtime. As disclosed earlier, content based hierarchical authorizations are configured to constrain a user's authorization with regards to access rules for a specific data structure field by means of a constraint clause. The constraint clause is configured to restrict the access of the user to a subset of datasets which complies with the restriction imposed by the constraint clause. Such constraint clauses can be generated into the control procedures by, for example, using corresponding SQL statements. The definition of the constraint clause is independent of the existence of the specific data structure field. This allows the setup of authorization and access rules for planning scenarios which may not yet exist but which may exist in the future. For example, content based hierarchical authorization constraint clauses can refer to data fields or field contents which are not even defined in the data model of the planning support system at the time when the content based hierarchical authorization constraint is generated. That is, authorization rules may refer to future products, organizational units, etc. without causing any problems for the execution of the respective control procedures because the corresponding SQL statements will simply find no hits as long as the objects referred to in the content based authorizations do not exist. The generated control procedures can then enforce the content based hierarchical authorizations according to the evaluation as part of the manipulating 1600 step (at runtime).

The method 1000 may further include a computing 1500 step to compute a computation output by using a computation element of a fourth type. The computation element has a computation rule portion for defining a computation rule for a compute operation applied to one or more values. Thereby, each value being used as an input for the computation may be stored in any one of the first, second, or third data structures or may even be the output of a further computation element. The computing step allows the dynamic computation of planning data which can be derived from data values stored in data structures. Therefore, memory space can be saved because the computation at runtime does not require persistence of the computed results.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Such storage devices may also provisioned on demand and be accessible through the Internet (Cloud Computing). Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a cathode ray tube (CRT) or liquid crystal display (LCD) monitor, for displaying information to the user and an input device such as a keyboard, touchscreen or touchpad, a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. Client computers can also be mobile devices, such as smartphones, tablet PCs or any other handheld computing device. The components of the system can be interconnected by any form or medium of digital data communication, e.g., a communication network. Examples of communication networks include a local area network (LAN) and a wide area network (WAN), e.g., the Internet or wireless LAN or telecommunication networks.

The computing system can include clients and servers. A client and server are generally remote from each other and typically interact through a communication network. The relationship of client and server arises by virtue of computer programs running on the respective computers and having a client-server relationship to each other.

## Claims

1. A computer system (100) for planning support, comprising:
a storage component (110) having a relational database configured to store:
a first data structure (111) of a first type having at least a first primary key column (PK1) and a first field column (F1),
a second data structure (112) of a second type having at least a second primary key column (PK2), a second field column (F2), a start column (S), and an end column (E), and
a third data structure (113) of a third type having at least a third primary key column (PK3), a quantity column (Q), and a point in time column (T),
wherein a data record (ID2) of the second data structure (112) defines a validity time interval for a data record (ID1) of the first data structure (111), and wherein a data record (ID3, ID4) of the third data structure (113) defines a plan quantity value for a specific point in time for the data record (ID1) of the first data structure (111); and
an interface component (130) configured to communicate with a client (200) to enable the client (200) to edit the plan quantity value for the specific point in time independent from the respective validity time interval.

2. The computer system (100) of claim 1, wherein the second data structure further has a value column.

3. The computer system (100) of claim 1 or 2, further configured to store a computation element (114) of a fourth type, the computation element (114) having a computation rule portion for defining a computation rule for a compute operation applied to one or more values, each value being stored in any one of the first, second, or third data structures or being the output of a further computation element.

4. The computer system (100) of any one of the previous claims, wherein each of the available data structures (111, 112, 113) includes at least one control column (C1, C2, C3), the control column being configured to store control values for the respective data records, each control value indicating permissiveness of an operation for the respective data record.

5. The computer system (100) of any one of the previous claims, further comprising:
a generator component (120) configured to generate the data structures (111, 112, 113) and their relations in response to information received from the client (200) about respective fields and their purposes.

6. The computer system (100) of claim 5, wherein the generator component is further configured to generate a set of control procedures (140) for the available data structures wherein each control procedure is based on a predefined, parameterized procedure template (150) and the respective data structure (111, 112, 113).

7. The computer system (100) of any one of the previous claims, wherein at least one content based hierarchical authorization rule is configured to constrain a user's authorization with regards to access rules for a specific data structure field by means of a constraint clause, the constraint clause configured to restrict the access of the user to a subset of datasets which complies with the restriction imposed by the constraint clause, the definition of the constraint clause being independent of the existence of the specific data structure field.

8. The computer system (100) of any one of the previous claims, wherein an admissibility clause is associated with a particular data structure field, the admissibility clause being configured as a rule for determining the admissibility of datasets associated with the particular data structure field.

9. The computer system (100) of any one of the claims 6 to 8, further having a layout component with one or more control elements and wherein a specific control element is associated with at least one table field defined in the available data structures (111, 112, 113) and the specific control element is configured to communicate with any one of the control procedures associated with the at least one table field.

10. The computer system (100) of any one of the previous claims, wherein the storage component is further configured
to store an original data structure (420) of the first type and a view data structure (430) of the first type, the view data structure (430) referencing field values stored in the original data structure (420), and
to store a bill of material data structure (410) of the second type wherein the bill of material data structure (420) has a relation with a data record of the original data structure for defining a parent component and further has a relation with a data record of the view data structure (430) for defining a child component of the parent component.

11. A computer implemented method (1000) for planning support, comprising:
receiving (1300) from a client (200) a request for manipulating planning data record in a third data structure (113) of a third type having at least a third primary key column (PK3), a quantity column (Q), and a point in time column (T), wherein the planning data record (ID3, ID4) of the third data structure (113) defines a plan quantity value for a specific point in time for a related data record (ID1) of a first data structure (111) of a first type having at least a first primary key column (PK1) and a first field column (F1);
associating (1400) the related data record (ID1) of the first data structure (111) with a further data record (ID2) of a second data structure (112) defining a validity time interval for the related data record (ID1) of the first data structure (111) wherein the second data structure (112) of a second type has at least a second primary key column (PK2), a second field column (F2), a start column (S), and an end column (E); and
manipulating (1600) the planning data record for the specific point in time independent from the respective validity time interval in accordance with the request.

12. The computer implemented method of claim 11, further comprising prior to the manipulating:
generating (1100) the data structures (111, 112, 113) and their relations in response to information received from the client (200) about respective fields and their purposes; and
generating (1200) a set of control procedures (140) for the available data structures wherein each control procedure is based on a predefined, parameterized procedure template (150) and the respective data structure (111, 112, 113).

13. The computer implemented method of claim 11 or 12, further comprising:
computing (1500) a computation output by using a computation element (114) of a fourth type, the computation element (114) having a computation rule portion for defining a computation rule for a compute operation applied to one or more values, each value being stored in any one of the first, second, or third data structures or being the output of a further computation element.

14. The computer implemented method of claim any one of the claims 11 to 13, further comprising:
evaluating a content based hierarchical authorization configured to constrain a user's authorization with regards to access rules for a specific data structure field by means of a constraint clause, the constraint clause configured to restrict the access of the user to a subset of datasets which complies with the restriction imposed by the constraint clause, the definition of the constraint clause being independent of the existence of the specific data structure field; and
enforcing the content based hierarchical authorization according to the evaluation as part of the manipulating (1600) step.

15. A computer program product that when loaded into a memory of a computing device and executed by at least one processor of the computing device executes the steps of the computer implemented method according to any one of the claims 11 to 14.
